# FASCICULE DE BREVET EUROPEEN

(11) **EP 3 683 458 B1**
(45) Date de publication et mention de la délivrance du brevet: **01.03.2023**
(21) Numéro de dépôt: 20151361.1
(22) Date de dépôt: 13.01.2020
(51) Int. Cl.: F16B 21/07, F16B 21/06, B60R 13/00, F16B 37/08

(54) **DISPOSITIF DE FIXATION MULTIGOUJON GENERANT UNE MISE SOUS TENSION, ET PROCEDE DE FIXATION D'UN TEL DISPOSITIF**
BEFESTIGUNGSVORRICHTUNG MIT MEHREREN STIFTEN, DIE EINE SPANNUNG ERZEUGT, UND BEFESTIGUNGSVERFAHREN EINER SOLCHEN VORRICHTUNG
MULTI-STUD ATTACHMENT DEVICE GENERATING TENSIONING, AND METHOD FOR ATTACHING SUCH A DEVICE

(30) Priorité: 21.01.2019 FR 1900491
(43) Date de publication de la demande: 22.07.2020
(73) Titulaire: A. Raymond et Cie, 38000 Grenoble (FR)
(72) Inventeur: DEPAIL, Yves-Marie, 38100 GRENOBLE (FR)
(74) Mandataire: IP Trust

(56) Documents cités:
- EP-A1- 1 538 350
- EP-A1- 3 339 664
- EP-A2- 1 273 811
- JP-U- S63 115 612
- US-A1- 2016 238 058

## Description

### DOMAINE DE L'INVENTION

La présente invention concerne un dispositif de fixation à un goujon fileté faisant saillie d'une embase. Le dispositif de fixation peut notamment servir à monter un accessoire sur une carrosserie automobile.

### ARRIERE PLAN TECHNOLOGIQUE DE L'INVENTION

On connaît des documents EP1538350, JPS63115612, FR2699237, FR2736976 et FR2765280 des agrafes monoblocs destinées à être encliquetées sur un goujon fileté en saillie d'une embase. Ces agrafes comprennent généralement une cage destinée à recevoir et guider le goujon. La cage comprend des bras flexibles portant des crans qui se referment en mâchoire sur le filetage du goujon lorsque celui-ci est inséré dans la cage.

Les solutions connues présentent toutefois l'inconvénient d'être adaptées à des goujons dont le diamètre et/ou le type de filet est précisément déterminé. Il est donc nécessaire de disposer de plusieurs types d'agrafes s'il est nécessaire de fixer ces agrafes à des goujons de diamètres variés ou dont le type de filet et varié. Ces solutions peuvent également nécessiter un effort important de la part de l'opérateur pour être verrouillées sur le goujon, et l'effort de maintien qu'elles procurent n'est pas toujours suffisamment bien maintenu.

### OBJET DE L'INVENTION

Un but de l'invention est de proposer un dispositif de fixation remédiant aux moins en partie aux inconvénients précités. Elle vise notamment à fournir un dispositif de fixation pouvant se fixer à un goujon fileté, qui puisse s'adapter à différents diamètres de goujons ou de type de filet, qui ne nécessite pas d'effort excessif de mise en place ou qui puisse maintenir fixement le dispositif sur le goujon.

### BREVE DESCRIPTION DE L'INVENTION

En vue de la réalisation de ce but, l'objet de l'invention propose un dispositif de fixation à un goujon fileté faisant saillie d'une embase, le dispositif de fixation comprenant :
- une pièce maitresse formée d'une cage rigide pour entourer le goujon et présentant une partie inférieure d'appui sur l'embase, une partie supérieure et une pluralité de griffes flexibles déformables comprenant respectivement une première extrémité libre destinée à se loger dans un filet du goujon, une seconde extrémité solidaire de la cage, et une partie centrale entre la première extrémité et la seconde extrémité, la partie centrale de chaque griffe est coudée, le coude étant orienté vers l'extérieur de la cage rigide et débordant de celle-ci;
- une pièce d'habillage comprenant une surface interne définissant un logement configurée pour accueillir la pièce maitresse par enchâssement sur la partie supérieure de la cage rigide, la surface interne du logement étant munie d'au moins une zone de butée pour prendre appui sur le coude de la partie centrale des griffes flexibles déformables et rapprocher leur première extrémité l'une de l'autre pour qu'elle se positionne dans un filet du goujon, et pour déformer les griffes flexibles déformables (7) et mettre la pièce maîtresse en tension, la pièce d'habillage comprenant également au moins une languette flexible, pour encliqueter la pièce d'habillage à la pièce maitresse et ainsi fixer le dispositif de fixation au goujon.

Ce dispositif de fixation peut de la sorte s'adapter à différents diamètres de goujon. La pièce maîtresse peut être mise en tension par la pièce d'habillage, les griffes étant fermement maintenues dans le filet du goujon. La tension dans la pièce maîtresse peut être maintenue par encliquetage de la pièce d'habillage.

Selon d'autres caractéristiques avantageuses et non limitatives de l'invention, prises seules ou selon toute combinaison techniquement réalisable :
- la cage rigide est définie par une pluralité de montants maintenus solidaires entre eux par des traverses ;
- la partie inférieure comprend des pattes formant des surfaces de contact avec l'embase ;
- la première extrémité des griffes flexibles déformables comporte une découpe en arc de cercle ;
- la première extrémité des griffes flexibles déformables est disposée dans un plan oblique à un axe principal défini par le goujon ;
- la pièce d'habillage présente une forme facilitant sa prise par un outil ;
- la pièce d'habillage présente une ouverture de dégagement du goujon ;
- la languette flexible porte un cran destiné à se loger sous une traverse supérieure de la cage lorsque la pièce d'habillage est entièrement enchâssée sur la pièce maîtresse ;
- la pièce maîtresse comprend quatre griffes déformables ;
- les premières extrémités des griffes flexibles déformables sont aptes à s'engager dans le filet d'un goujon qui peut présenter une variété de diamètres ou une variété de type de filet ;
- le logement est muni de moyens pour retenir la pièce d'habillage partiellement enchâssée sur la pièce maîtresse dans une configuration de livraison.

L'objet de l'invention porte également sur un procédé de verrouillage d'un tel dispositif de fixation sur un goujon faisant sailli d'une embase, le procédé comprenant :
- une étape de placement visant à faire pénétrer le goujon axialement dans la cage rigide et à placer la partie inférieure d'appui en contact avec l'embase ;
- une étape de compression au cours de laquelle on enchâsse la pièce d'habillage sur la partie supérieure de la cage rigide pour positionner les griffes flexibles déformables dans un filet du goujon, déformer les griffes flexibles déformables et mettre en tension la pièce maîtresse;
- une étape d'encliquetage dans laquelle on rend solidaire la pièce d'habillage à la pièce maîtresse pour maintenir la tension de la pièce maîtresse.

Le procédé peut comprendre une étape de dévissage du dispositif de fixation du goujon après l'étape d'encliquetage.

### BREVE DESCRIPTION DES FIGURES

D'autres caractéristiques et avantages de l'invention ressortiront de la description détaillée de l'invention qui va suivre en référence aux figures annexées sur lesquels :
[Fig. 1] La figure 1 représente une vue d'ensemble d'une pièce de fixation conforme à l'invention ;
[Fig. 2] La figure 2 représente une vue en coupe d'un dispositif de fixation en configuration de livraison ;
[Fig. 3] La figure 3 représente une coupe d'un dispositif de fixation en configuration de verrouillage ;
[Fig. 4] La figure 4 représente les étapes de mise en place d'un dispositif de fixation conforme à l'invention.

### DESCRIPTION DETAILLEE DE L'INVENTION

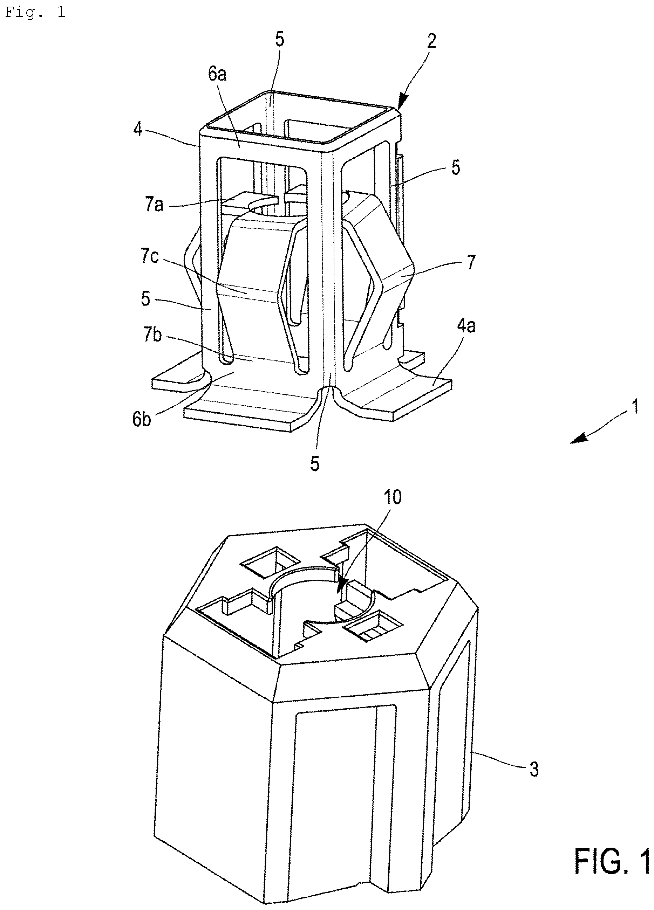

La figure 1 présente une vue d'ensemble d'un dispositif de fixation 1 conforme à la présente invention. Le dispositif est composé d'une pièce maîtresse 2 et d'une pièce d'habillage 3.

La pièce maîtresse 2 est formée d'une cage rigide 4 destinée à recevoir coaxialement le goujon et à l'entourer. La cage rigide 4 est définie par une pluralité de montants 5, quatre montants sur la représentation de la figure 1, maintenus solidaires par des traverses supérieures 6a et inférieures 6b respectivement disposées à leurs extrémités. L'invention n'est toutefois nullement limitée à la configuration de la cage 4 représentée sur la figure 1, elle peut notamment présenter une forme différente, un nombre différent de montants 5 et de traverses 6a, 6b. Il n'est pas nécessaire non plus que les montants 5 soient tous reliés deux à deux par des traverses 6a, 6b. Quelle que soit la forme et la manière dont est définie la cage 4, celle-ci est suffisamment rigide pour permettre l'encliquetage de la pièce d'habillage 3, comme cela sera détaillé dans la suite de cette description.

La cage rigide 4 présente une partie inférieure 4a d'appui, ici 4 pattes solidaires des traverses inférieures 6a, formant des surfaces de contact avec l'embase. Lorsque le dispositif 1 est fixé au goujon, les pattes 4a assurent une répartition homogène de la contrainte. La cage rigide 4 présente également une partie supérieure, formée ici des 4 traverses supérieurs 6a.

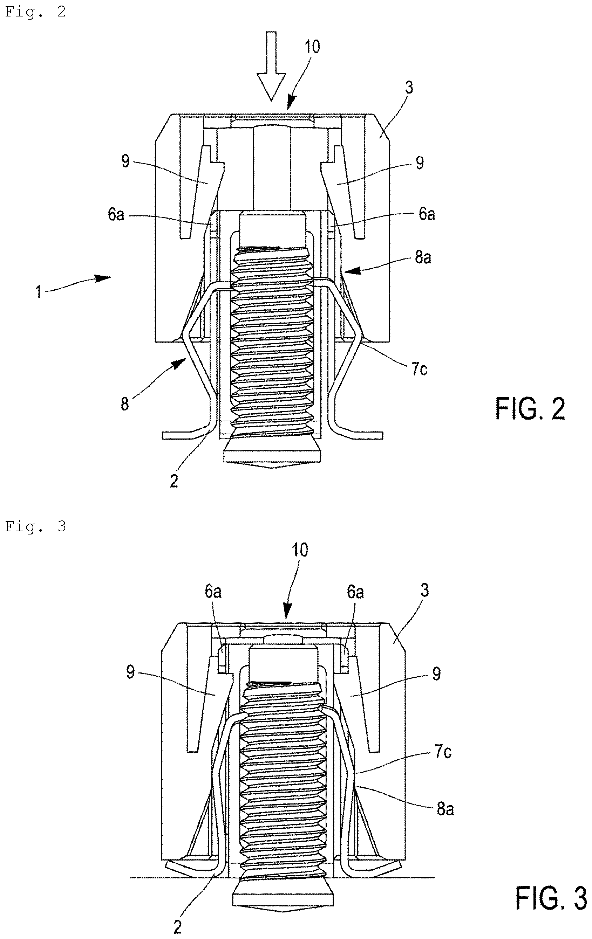

La pièce maîtresse 2 de la figure 1 comprend également quatre griffes flexibles déformables 7 présentant une première extrémité libre 7a destinée à se loger dans un filet du goujon, une seconde extrémité 7b solidaire de la cage rigide 4, et une partie centrale 7c entre la première extrémité 7a et la seconde extrémité 7b. Par « griffes flexibles déformables », on entend que les griffes sont élastiquement déformables. D'une manière plus générale, la pièce maîtresse 2 peut comprendre une pluralité de griffes 7, par exemple 4 comme dans l'exemple représenté ou plus. Pour faciliter l'engagement de la première extrémité 7a des griffes flexibles 7 dans un filet du goujon, celle-ci comporte une découpe en arc de cercle dont les dimensions sont ajustées sensiblement à celle du goujon. Pour la même raison, les griffes 7 sont également repliées de manière à placer leur première extrémité 7a dans un plan perpendiculaire ou oblique à l'axe principal défini par le goujon. La seconde extrémité 7b de chaque griffe 7 est ici solidaire d'une traverse inférieure 6b de la cage rigide 4. Lorsque la pièce maîtresse 2 est en configuration de livraison, tel que cela est le cas sur la figure 2, les premières extrémités 7a des griffes 7 sont suffisamment écartées les unes des autres pour permettre le passage du goujon, lorsque celui-ci est inséré coaxialement dans la cage rigide 4. La partie centrale 7c de chaque griffe 7 est coudée, le coude étant orienté vers l'extérieur de la cage 4 et débordant de celle-ci. La partie centrale 7c ainsi coudée forme une zone d'appui aisément accessible pour déformer les griffes flexibles 7 et rapprocher leur première extrémité 7a l'une de l'autre. On peut de la sorte engager la première extrémité 7a des griffes flexibles 7 dans un filet du goujon, de manière à placer fixement la pièce maîtresse 2 à celui-ci. Que les griffes flexibles déformables 7 soient coudées, l'application d'une pression permet de les maintenir fermement contre le goujon en les déformant élastiquement. Cela conduit à mettre ces griffes 7, et plus généralement la pièce maîtresse 2, en tension. On note que ce mécanisme de fixation, qui tire profit du caractère déformable des griffes, s'ajuste à une grande variété de diamètre de goujon et de type de filet, ce qui est particulièrement avantageux et non divulgué par les solutions de l'état de la technique.

Pour des raisons de rigidité et de facilité de fabrication, la pièce maîtresse 2 est avantageusement métallique. Elle peut être fabriquée dans ce cas par découpe et pliage d'un feuillard métallique. Elle peut également être composée d'une matière plastique.

Le dispositif de fixation 1 comprend également une pièce d'habillage 3, avantageusement formée d'une matière plastique et fabriquée par exemple par injection. Comme cela est plus visible sur la figure 2, la pièce d'habillage 3 définit un logement 8 dont les dimensions sont ajustées à celles de la pièce maîtresse 2 de manière à pouvoir l'accueillir. La pièce d'habillage 3 peut ainsi être enchâssée sur la partie supérieure de la cage rigide 4.

Le logement 8 est défini par une surface interne de la pièce d'habillage 3. La surface interne présente une zone de butée 8a configurée pour prendre appui sur les griffes flexibles 7, ici sur la partie centrale 7c de ces griffes, lorsque la pièce d'habillage 3 est enchâssée sur la pièce maîtresse 2, pour les rabattre sur le goujon et les déformer. Dans l'exemple représenté sur les figures 2 et 3, la zone de butée 8a est formée par une section tronconique du logement suivi d'une section cylindrique. Ces sections présentent des dimensions suffisantes pour permettre le passage de la cage rigide 4, mais entrent en contact avec les portions centrales 7c coudées des griffes flexibles 7.

La pièce d'habillage 3 comprend également au moins une languette flexible 9, quatre languettes flexibles sur l'exemple illustré, pour encliqueter la pièce d'habillage 3 à la pièce maîtresse 2 et ainsi fixer le dispositif de fixation 1 au goujon. Comme cela est bien visible sur les figures 2 et 3, les languettes flexibles 9 portent ici un cran destiné à se loger sous une traverse supérieure 6a de la cage lorsque la pièce d'habillage 3 est entièrement enchâssée sur la pièce maîtresse 2, de manière à bloquer le dispositif 1 en configuration de verrouillage.

La pièce d'habillage 3 peut présenter une forme extérieure qui facilite sa manipulation par un outil, par exemple une forme hexagonale, ou carrée, pour permettre le démontage de la pièce de fixation comme cela est explicité dans la suite de cette description. Outre l'ouverture du logement 8 débouchant sur une face de la pièce d'habillage 3, permettant l'enchâssement de cette pièce sur la pièce maîtresse 2, on peut prévoir une ouverture 10 sur une face principale, opposée à celle sur laquelle le logement 8 débouche, permettant le dégagement du goujon de la pièce de fixation 1, lorsque sa hauteur dépasse celle de la pièce 1. On peut prévoir également des ouvertures de démontage permettant d'introduire un outil pour dégager les languettes 9, en les écartant suffisamment vers l'extérieur pour libérer les crans des traverses supérieures, et permettre le démontage de la pièce d'habillage 3 de la pièce maîtresse 2. Ces ouvertures de démontage sont disposées sur la face de la pièce d'habillage 3 au droit des languettes flexibles 9 lorsque le dispositif est en configuration de verrouillage.

Le dispositif de fixation 1 peut être placé dans une configuration de livraison, représentée sur la figure 2. Dans cette configuration, la pièce d'habillage 3 est partiellement enchâssée sur la pièce maîtresse 2. La zone de butée 8a peut reposer sur la partie centrale 7c des griffes flexibles 7, sans toutefois que cela conduise à déformer ces griffes pour que leur première extrémité obstrue le passage axial du goujon dans la cage rigide 4. Dans cette configuration également, la partie supérieure de la cage rigide 4 peut être en contact avec les languettes flexibles 9 disposée dans le fond du logement 8, sans toutefois que la pièce d'habillage 3 ne soit encliquetée sur la pièce maîtresse 2, c'est à dire que les crans portés par les languettes 9 ne soient passés sous les traverses supérieures 6a. On peut prévoir de munir la pièce d'habillage 3, et notamment la surface interne du logement, d'au moins une languette ou de tout autre moyen permettant de retenir la pièce d'habillage 3 partiellement enchâssée sur la pièce maîtresse 2 dans la configuration de livraison.

Le dispositif de fixation 1 peut être placé dans une configuration de verrouillage, représentée sur la figure 3. Dans cette configuration, la pièce d'habillage 3 est entièrement enchâssée sur la pièce maîtresse 2. Avantageusement, dans cette position, l'extrémité de la pièce d'habillage 3 est en contact ou très proche des pattes de contact qui reposent sur l'embase, la pièce d'habillage 3 protège de la sorte la cage rigide 4 et le goujon de l'environnement extérieur. Les premières extrémités 7a des griffes flexibles 7 sont suffisamment rapprochées les unes des autres pour qu'elles se positionnent dans un filet du goujon, lorsqu'un tel goujon est présent. Dans ce cas, les griffes flexibles 7 et la pièce maîtresse 2 sont mises en tension par la déformation élastique que leur impose la zone de butée 8a, en contact forcée sur la partie centrale 7c des griffes flexibles 7. Dans cette configuration également, la pièce d'habillage 3 est encliquetée sur la pièce maîtresse 2, c'est à dire que, dans le mode de mise en oeuvre illustré, les crans portés par les languettes 9 sont passés sous les traverses supérieures 6a.

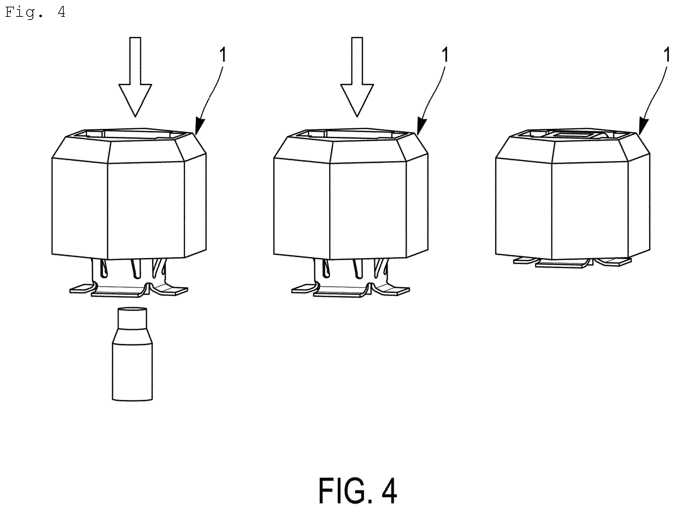

La figure 4 présente les différentes étapes d'assemblage du dispositif de fixation 1 à un goujon.

Au cours d'une étape de placement, on dispose le dispositif de fixation 1, ici pré assemblé en configuration de livraison, sur le goujon. On fait donc pénétrer le goujon axialement dans la cage rigide 4, de sorte que cette cage 4 entoure le goujon, et on vient placer les pattes 4a en contact avec l'embase.

Au cours d'une étape suivante de compression, on applique un effort axial, dirigé vers l'embase sur la pièce d'habillage 3. Cet effort conduit à déplacer cette pièce d'habillage 3 vis à vis de la pièce maîtresse 2, qui est maintenue fixe contre l'embase par l'intermédiaire des pattes de contact. Au cours de ce déplacement, la zone de butée 8a prend appui sur la partie centrale 7c des griffes flexibles 7, ce qui conduit à rapprocher leur première extrémité 7a pour qu'elle se positionne dans un filet du goujon. Les griffes flexibles 7, et la pièce maîtresse 2, sont dans la suite du déplacement de la pièce d'habillage 2 progressivement mises en tension. La pièce maîtresse 2 est ainsi fixement attachée au goujon. Cette phase de compression est facilitée par la forme tronconique de la portion initiale de la zone de butée qui forme une rampe contre laquelle la forme coudée de la partie centrale 7c des griffes peut facilement glisser. La mise sous tension et la déformation élastique des griffes 7 est saturée lorsque le coude entre dans la portion cylindrique de la zone de butée 8a. Le déplacement de la pièce d'habillage 3 et son enchâssement sur la pièce maîtresse 2 conduit également à déformer les languettes flexibles 9 pour permettre la progression de la cage rigide 4 dans le logement 8. Cette déformation s'effectue jusqu'à permettre le passage des crans portés par les languettes 9 sous la partie supérieure de la cage 4, et notamment sous les traverses supérieures 6a. On encliquette de la sorte la pièce d'habillage 3 à la pièce maîtresse 2 pour les rendre solidaire l'une de l'autre, on place le dispositif de fixation 1 en configuration de fixation dans laquelle, en maintenant la tension de la pièce maîtresse 2, il est fermement maintenu au goujon. On note que l'encliquetage de la pièce d'habillage 3 peut être accompagné d'un bruit audible permettant à l'opérateur de s'assurer du bon montage de la pièce de fixation.

Dans la pratique, le déplacement de la pièce d'habillage 3 pour placer le dispositif de fixation 1 de la configuration de livraison à la configuration de verrouillage peut être de faible amplitude, de l'ordre de 6 mm, par exemple compris entre 4 et 10mm. L'effort axial nécessaire pour verrouiller le dispositif 1 en configuration de fixation peut être de relativement faible intensité, de l'ordre de 40N pour le dispositif pris en exemple dans les figures. Pourtant les efforts d'arrachement du dispositif de fixation 1 au goujon peuvent être très important, supérieur à 600N.

Le dispositif de fixation 1 dans la configuration de verrouillage peut être facilement démonté du goujon par dévissage ou remonté sur le goujon par vissage. C'est notamment le cas lorsque cette pièce présente une forme, par exemple carrée, octogonale ou hexagonale, facilitant sa prise par un outil. Comme cela a été présenté antérieurement, la pièce d'habillage 3 peut également être desencliquetée de la pièce maîtresse 2.

Bien entendu l'invention n'est pas limitée au mode de mise en oeuvre décrit et on peut y apporter des variantes de réalisation sans sortir du cadre de l'invention tel que défini par les revendications.

## Revendications

1. Dispositif de fixation (1) à un goujon fileté faisant saillie d'une embase, le dispositif de fixation comprenant :
- une pièce maîtresse (2) formée d'une cage rigide (4) pour entourer le goujon et présentant une partie inférieure d'appui (4a) sur l'embase, une partie supérieure et une pluralité de griffes flexibles déformables (7) comprenant respectivement une première extrémité libre (7a) destinée à se loger dans un filet du goujon, une seconde extrémité (7b) solidaire de la cage, et une partie centrale (7c) entre la première extrémité (7a) et la seconde extrémité (7b), la partie centrale (7c) de chaque griffe (7) étant coudée, le coude étant orienté vers l'extérieur de la cage rigide (4) et débordant de celle-ci ;
- une pièce d'habillage (3) comprenant une surface interne définissant un logement (8) configurée pour accueillir la pièce maîtresse (2) par enchâssement sur la partie supérieure de la cage rigide (4), la surface interne du logement (8) étant munie d'au moins une zone de butée pour prendre appui sur le coude de la partie centrale (7c) des griffes flexibles déformables (7), rapprocher leur première extrémité (7a) l'une de l'autre pour qu'elle se positionne dans un filet du goujon, et pour déformer les griffes flexibles déformables (7) et mettre la pièce maîtresse (2) en tension, la pièce d'habillage (3) comprenant également au moins une languette flexible (9), pour encliqueter la pièce d'habillage (3) à la pièce maîtresse (2) et ainsi fixer le dispositif de fixation (1) au goujon.

2. Dispositif de fixation (1) selon la revendication précédente dans lequel la cage rigide (4) est définie par une pluralité de montants (5) maintenus solidaires entre eux par des traverses (6a, 6b).

3. Dispositif de fixation (1) selon l'une des revendications précédentes dans lequel la partie inférieure (4a) comprend des pattes formant des surfaces de contact avec l'embase.

4. Dispositif de fixation (1) selon l'une des revendications précédentes dans lequel la première extrémité (7a) des griffes flexibles déformables (7) comporte une découpe en arc de cercle.

5. Dispositif de fixation (1) selon l'une des revendications précédentes dans lequel la première extrémité (7a) des griffes flexibles déformables (7) est disposée dans un plan oblique à un axe principal défini par le goujon.

6. Dispositif de fixation (1) selon l'une des revendications précédentes dans lequel la pièce d'habillage (3) présente une forme facilitant sa prise par un outil.

7. Dispositif de fixation (1) selon l'une des revendications précédentes dans lequel la pièce d'habillage (3) présente une ouverture (10) de dégagement du goujon.

8. Dispositif de fixation (1) selon l'une des revendications 2 à 7dans lequel la languette flexible (9) porte un cran destiné à se loger sous une traverse supérieure (6a) de la cage lorsque la pièce d'habillage (3) est entièrement enchâssée sur la pièce maîtresse (2).

9. Dispositif de fixation (1) selon l'une des revendications précédentes dans lequel la pièce maîtresse (2) comprend quatre griffes déformables (7).

10. Dispositif de fixation (1) selon l'une des revendications précédentes dans lequel les premières extrémités des griffes flexibles déformables sont aptes à s'engager dans le filet d'un goujon qui peut présenter une variété de diamètres.

11. Dispositif de fixation (1) selon l'une des revendications précédentes dans lequel le logement (8) est munie de moyens pour retenir la pièce d'habillage (3) partiellement enchâssée sur la pièce maîtresse (2) dans une configuration de livraison.

12. Procédé de verrouillage d'un dispositif de fixation (1) conforme à l'une des revendications précédentes, sur un goujon faisant saillie d'une embase, le procédé comprenant :
- une étape de placement visant à faire pénétrer le goujon axialement dans la cage rigide (4) et à placer la partie inférieure d'appui (4a) en contact avec l'embase ;
- une étape de compression au cours de laquelle on enchâsse la pièce d'habillage (3) sur la partie supérieure de la cage rigide (4) pour positionner les griffes flexibles déformables (7) dans un filet du goujon, déformer les griffes flexibles déformables (7) et mettre en tension la pièce maîtresse (2);
- une étape d'encliquetage dans laquelle on rend solidaire la pièce d'habillage (3) à la pièce maîtresse (2) pour maintenir la tension de la pièce maîtresse.

13. Procédé selon la revendication précédente, comprenant une étape de dévissage du dispositif de fixation (1) du goujon après l'étape d'encliquetage.

## Patentansprüche

1. Vorrichtung (1) zum Befestigen an einem Gewindestift, der von einer Basis vorsteht, die Befestigungsvorrichtung umfassend:
- ein Hauptstück (2), das aus einem starren Käfig (4) zum Umgeben des Stifts ausgebildet ist und einen unteren Anlageteil (4a) an der Basis, einen oberen Teil und eine Vielzahl von verformbaren flexiblen Krallen (7) vorweist, umfassend jeweils ein erstes freies Ende (7a), das dafür bestimmt ist, in einem Gewinde des Stifts untergebracht zu werden, ein zweites Ende (7b), das mit dem Käfig fest verbunden ist, und einen Mittelteil (7c) zwischen dem ersten Ende (7a) und dem zweiten Ende (7b), wobei der Mittelteil (7c) jeder Kralle (7) gebogen ist, wobei die Biegung in Richtung der Außenseite des starren Käfigs (4) ausgerichtet ist und ihn überragt;
- ein Verkleidungsstück (3), umfassend eine Innenoberfläche, die ein Gehäuse (8) definiert, das zum Aufnehmen des Hauptstücks (2) durch Einfügen auf dem oberen Teil des starren Käfigs (4), wobei die Innenoberfläche des Gehäuses (8) mit mindestens einem Anschlagsbereich zum Anliegen an der Biegung des Mittelteils (7c) der verformbaren flexiblen Krallen (7) versehen ist, gegenseitigen Näherbringen ihres ersten Endes (7a), damit es sich in einem Gewinde des Stifts positioniert, und zum Verformen der verformbaren flexiblen Krallen (7) und Spannen des Hauptstücks (2) konfiguriert ist, das Verkleidungsstück (3) ebenso umfassend mindestens einen flexiblen Lappen (9) zum Einrasten des Verkleidungsstücks (3) an dem Hauptstück (2) und folglich Befestigen der Befestigungsvorrichtung (1) an dem Stift.

2. Befestigungsvorrichtung (1) nach dem vorstehenden Anspruch, wobei der starre Käfig (4) durch eine Vielzahl von Stützen (5) definiert ist, die durch Querstreben (6a, 6b) fest verbunden gehalten werden.

3. Befestigungsvorrichtung (1) nach einem der vorstehenden Ansprüche, wobei der untere Teil (4a) Laschen umfasst, die mit der Basis Berührungsoberflächen ausbilden.

4. Befestigungsvorrichtung (1) nach einem der vorstehenden Ansprüche, wobei das erste Ende (7a) der verformbaren flexiblen Krallen (7) einen kreisbogenförmigen Ausschnitt aufweist.

5. Befestigungsvorrichtung (1) nach einem der vorstehenden Ansprüche, wobei das erste Ende (7a) der verformbaren flexiblen Krallen (7) in einer Ebene schräg zu einer Hauptachse angeordnet ist, die durch den Stift definiert wird.

6. Befestigungsvorrichtung (1) nach einem der vorstehenden Ansprüche, wobei das Verkleidungsstück (3) eine Form vorweist, die sein Fassen durch ein Werkzeug erleichtert.

7. Befestigungsvorrichtung (1) nach einem der vorstehenden Ansprüche, wobei das Verkleidungsstück (3) eine Öffnung (10) zum Lösen des Stifts vorweist.

8. Befestigungsvorrichtung (1) nach einem der Ansprüche 2 bis 7, wobei der flexible Lappen (9) eine Einkerbung trägt, die dafür bestimmt ist, unter einer oberen Querstrebe (6a) des Käfigs untergebracht zu werden, wenn das Verkleidungsstück (3) vollständig auf dem Hauptstück (2) eingefügt ist.

9. Befestigungsvorrichtung (1) nach einem der vorstehenden Ansprüche, wobei das Hauptstück (2) vier verformbare Krallen (7) umfasst.

10. Befestigungsvorrichtung (1) nach einem der vorstehenden Ansprüche, wobei die ersten Enden der verformbaren flexiblen Krallen geeignet sind, um in das Gewinde eines Stifts einzugreifen, der eine Auswahl von Durchmessern vorweisen kann.

11. Befestigungsvorrichtung (1) nach einem der vorstehenden Ansprüche, wobei das Gehäuse (8) mit Mitteln zum Zurückhalten des Verkleidungsstücks (3) versehen ist, das auf dem Hauptstück (2) in einer Abgabekonfiguration teilweise eingefügt ist.

12. Verfahren zum Verriegeln einer Befestigungsvorrichtung (1) entsprechend einem der vorstehenden Ansprüche an einem Stift, der von einer Basis vorsteht, das Verfahren umfassend:
- einen Platzierungsschritt, der darauf abzielt, den Stift axial in den starren Käfig (4) eindringen zu lassen und den unteren Anlageteil (4a) in Berührung mit der Basis zu platzieren;
- einen Kompressionsschritt, während dessen das Verkleidungsstück (3) auf dem oberen Teil des starren Käfigs (4) zum Positionieren der verformbaren flexiblen Krallen (7) in einem Gewinde des Stifts, Verformen der verformbaren flexiblen Krallen (7) und Spannen des Hauptstücks (2) eingefügt wird;
- einen Einrastschritt, wobei das Verkleidungsstück (3) an dem Hauptstück (2) zum Halten der Spannung des Hauptstücks fest verbunden wird.

13. Verfahren nach dem vorstehenden Anspruch, umfassend einen Schritt eines Abschraubens der Befestigungsvorrichtung (1) von dem Stift nach dem Einrastschritt.

## Claims

1. Device (1) for fastening to a threaded stud projecting from a base, the fastening device comprising:
- a main part (2) formed by a rigid frame (4) for enclosing the stud and having a lower support portion (4a) on the base, an upper portion and a plurality of deformable flexible grips (7) each comprising a first free end (7a) intended to be positioned in a thread of the stud, a second end (7b) secured to the frame, and a central portion (7c) between the first end (7a) and the second end (7b), the central portion (7c) of each grip (7) being bent, the bend being oriented toward the outside of the rigid frame (4) and projecting therefrom;
- a covering part (3) comprising an inner surface defining a housing (8) configured to accommodate the main part (2) by fitting onto the upper portion of the rigid frame (4), the inner surface of the housing (8) being provided with at least one abutment zone for bearing against the bend of the central portion (7c) of the deformable flexible grips (7), thereby bringing the first ends (7a) thereof closer to each other so that said ends are positioned in a thread of the stud, and thus bending the deformable flexible grips (7) and tensioning the main part (2), the covering part (3) also comprising at least one flexible tab (9) for snap-fitting the covering part (3) to the main part (2) and thus fastening the fastening device (1) to the stud.

2. Fastening device (1) according to the preceding claim, wherein the rigid frame (4) is defined by a plurality of uprights (5) secured together by crosspieces (6a, 6b).

3. Fastening device (1) according to either of the preceding claims, wherein the lower portion (4a) comprises lugs forming surfaces for contact with the base.

4. Fastening device (1) according to any of the preceding claims, wherein the first end (7a) of the deformable flexible grips (7) comprises a semi-circular cutout.

5. Fastening device (1) according to any of the preceding claims, wherein the first end (7a) of the deformable flexible grips (7) is arranged in a plane oblique to a main axis defined by the stud.

6. Fastening device (1) according to any of the preceding claims, wherein the covering part (3) has a shape which enables it to be gripped by a tool.

7. Fastening device (1) according to any of the preceding claims, wherein the covering part (3) has an opening (10) enabling the stud to be removed.

8. Fastening device (1) according to any of claims 2 to 7, wherein the flexible tab (9) has a notch intended to be positioned under an upper crosspiece (6a) of the frame when the covering part (3) is fully fitted onto the main part (2).

9. Fastening device (1) according to any of the preceding claims, wherein the main part (2) comprises four deformable grips (7).

10. Fastening device (1) according to any of the preceding claims, wherein the first ends of the deformable flexible grips are capable of engaging with the thread of a stud which can have a variety of diameters.

11. Fastening device (1) according to any of the preceding claims, wherein the housing (8) is provided with means for holding the covering part (3) partially fitted onto the main part (2) in a delivery configuration.

12. Method for locking a fastening device (1) according to any of the preceding claims, on a stud projecting from a base, the method comprising:
- a placement step aimed at enabling the stud to penetrate axially into the rigid frame (4) and aimed at placing the lower support portion (4a) in contact with the base;
- a compression step during which the covering part (3) is fitted onto the upper portion of the rigid frame (4) in order to position the deformable flexible grips (7) into a thread of the stud, deform the deformable flexible grips (7) and tension the main part (2);
- a snap-fitting step in which the covering part (3) is secured to the main part (2) thus maintaining the tensioning of the main part.

13. Method according to the preceding claim, comprising a step of unscrewing the fastening device (1) from the stud after the snap-fitting step.
